(19) Europäisches Patentamt
European Patent Office
Office européen des brevets

(11) **EP 3 632 847 A1**

(12) **EUROPEAN PATENT APPLICATION**
published in accordance with Art. 153(4) EPC

(43) Date of publication:
08.04.2020 Bulletin 2020/15

(51) Int Cl.:
*C01B 32/194* (2017.01)   *C08K 9/06* (2006.01)

(21) Application number: 18821091.8

(22) Date of filing: 19.01.2018

(86) International application number:
PCT/CN2018/073409

(87) International publication number:
WO 2018/233285 (27.12.2018 Gazette 2018/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(30) Priority: 24.06.2017 CN 201710489652
28.12.2017 CN 201711455687

(71) Applicants:
• Huawei Technologies Co., Ltd.
Longgang District
Shenzhen, Guangdong 518129 (CN)
• Cambridge Enterprise Limited
Cambridge
Cambridgeshire CB2 1TN (GB)

(72) Inventors:
• XU, Yan
Shenzhen
Guangdong 518129 (CN)
• LIN, Yue
Cambridgeshire CB2 1TN (GB)
• HODGE, Steve
Cambridgeshire CB2 1TN (GB)
• FERRARI, Andrea
Cambridgeshire CB2 1TN (GB)

(74) Representative: Körber, Martin Hans
Mitscherlich PartmbB
Patent- und Rechtsanwälte
Sonnenstrasse 33
80331 München (DE)

(54) **FUNCTIONALIZED GRAPHENE AND PREPARATION METHOD THEREFOR, AND POLYORGANOSILOXANE**

(57) In the abstract of this specification, this application provides funcctionalized graphene. The functionalized graphene is graphene onto whose surface one or more active molecules are grafted, the active molecule includes a plurality of terminal functional groups, and the plurality of terminal functional groups include at least two active functional groups. Because the active functional groups can chemically react with molecules in silicone oil, the functionalized graphene can evenly dissolve in the silicone oil, so that polyorganosiloxane prepared by using the functionalized graphene has good heat conduction performance. In addition, this application further provides a preparation method of the functionalized graphene and corrresponding polyorganosiloxane.

FIG. 1A

# Description

This application claims priorities to Chinese Patent Application No. 201710489652.X, filed with the Chinese Patent Office on June 24, 2017 and entitled "FUNCTIONALIZED GRAPHENE, PREPARATION METHOD THEREOF, AND POLYORGANOSILOXANE" and Chinese Patent Application No. 201711455687.8, filed with the Chinese Patent Office on December 28, 2017 and entitled "FUNCTIONALIZED GRAPHENE, PREPARATION METHOD THEREOF, AND POLYORGANOSILOXANE", which are incorporated herein by reference in their entireties.

## TECHNICAL FIELD

This application relates to the field of heat conduction technologies, and in particular, to functionalized graphene, a preparation method of the functionalized graphene, and polyorganosiloxane prepared by using the functionalized graphene.

## BACKGROUND

Because graphene, as a new-type heat conducting filler, has a super high coefficient of heat conductivity greater than 3,000 W/mk, the graphene becomes a research hotspot in developing high-performance heat conducting materials currently. A previous research has shown that organic silicone resin having a coefficient of heat conductivity greater than 2 W/mk can be obtained by adding graphene with a weight percentage ranging from 5% to 10% to silicone oil. When a conventional heat conducting filler (for example, aluminum oxide) is added to the silicone oil, if organic silicone resin having a same coefficient of heat conductivity needs to be obtained, a heat conducting filler with a weight percentage ranging from 60% to 90% needs to be added to the silicone oil. In other words, to obtain the organic silicone resin having the same coefficient of heat conductivity, the weight percentage of the graphene that needs to be added to the silicone oil is far less than the weight percentage of the conventional heat conducting filler that needs to be added to the silicone oil.

However, compatibility between the graphene and the silicone oil is relatively poor, and after the graphene is added to the silicone oil, the graphene easily aggregates.

## SUMMARY

This application provides functionalized graphene. Compatibility between the functionalized graphene and silicone oil is better than compatibility between graphene and silicone oil in the prior art. Further, this application further provides a preparation method of the functionalized graphene, and polyorganosiloxane prepared by using the functionalized graphene.

According to a first aspect, this application provides functionalized graphene. The functionalized graphene includes one or more active molecules and graphene, and a plurality of active molecules are separated from each other.

Each active molecule is grafted onto the graphene by using a C-O-Si covalent bond, and at least one active molecule is grafted onto the graphene by using a plurality of C-O-Si covalent bonds, where C in the C-O-Si covalent bond comes from the graphene. It should be noted that the plurality means at least two.

A main chain structure of the active molecule is a structure obtained after at least two Si-O bonds are connected in series and then connected to a Si bond in series, or is a Si-O-Si structure, and each active molecule includes at least two active functional groups.

Optionally, each active molecule has a plurality of terminal functional groups, each terminal functional group is connected to one Si in the main chain structure, and the plurality of terminal functional groups include the at least two active functional groups.

Optionally, each of the plurality of terminal functional groups is directly connected to one Si in the main chain structure.

Optionally, each of the plurality of terminal functional groups is connected to one Si in the main chain structure by using a chain group such as an alkyl group.

Optionally, in the plurality of terminal functional groups, each of some terminal functional groups is directly connected to one Si in the main chain structure, and each of the other terminal functional groups is connected to one Si in the main chain structure by using a chain group such as an alkyl group.

In these embodiment mentioned above, because the functionalized graphene is the graphene onto which one or more active molecules are grafted, and each active molecule has at least two active functional groups, after the functionalized graphene disperses in silicone oil, the at least two active functional groups can chemically react with molecules in the silicone oil. Therefore, compatibility between the functionalized graphene and the silicone oil is better than compatibility between graphene and silicone oil in the prior art.

Further, in the functionalized graphene, at least one active molecule is grafted onto a surface of the graphene by using at least two C-O-Si covalent bonds, that is, the at least one active molecule is obtained after at least two silanes grafted onto the surface of the graphene are polymerized. Therefore, compared with a case in which each silane is grafted onto the surface of the graphene by using one C-O-Si covalent bond, the at least one active molecule covers the surface of the graphene like a net, that is, a coverage area is larger. Therefore, compared with functionalized graphene onto whose surface silanes are grafted, the functionalized graphene provided in this application has lower electric conductivity.

With reference to the first aspect, in a first possible implementation, in the functionalized graphene, a weight percentage of carbon is greater than or equal to 50% and less than or equal to 99.8%, a weight percentage of oxygen is greater than or equal to 0.1% and less than or equal to 49.9%, and a weight percentage of silicon is greater than or equal to 0.1% and less than or equal to 49.9%.

In addition to the carbon, the functionalized graphene provided in this application further has the oxygen and the silicon. Therefore, compared with graphene in the prior art, the functionalized graphene provided in this application has lower electric conductivity.

With reference to the first aspect or the first possible implementation of the first aspect, in a second possible implementation, the graphene is monolayer graphene or multilayer graphene.

When the graphene is the monolayer graphene, the active molecule is grafted onto a surface of the monolayer graphene.

When the graphene is the multilayer graphene, the active molecule is grafted onto a surface of the multilayer graphene, or grafted between two adjacent graphene layers of the multilayer graphene. The surface of the multilayer graphene is outer surfaces of two outermost graphene layers of the multilayer graphene. It should be noted that a surface that is of each outermost layer of graphene and that faces an adjacent layer of graphene is an inner surface, and the outer surface is opposite to the inner surface. To be specific, when the graphene is the multilayer graphene, the active molecule may be grafted onto the inside of the multilayer graphene, or may be grafted onto the surface (or edges) of the multilayer graphene.

With reference to the first aspect, the first possible implementation of the first aspect, or the second possible implementation of the first aspect, in a third possible implementation, the at least two active functional groups include at least one silicon-hydrogen bond or unsaturated bond, and at least one oxygen-containing hydrolysable group.

Optionally, the unsaturated bond is a carbon-carbon double bond or a carbon-carbon triple bond.

The carbon-carbon double bond may be a vinyl group or a propenyl group.

With reference to the third possible implementation of the first aspect, in a fourth possible implementation, the oxygen-containing hydrolysable group is an alkoxy group or an acyloxy group. It should be noted that the oxygen-containing hydrolysable group is a group that can be hydrolyzed to generate silanol.

With reference to the first aspect or any one of the first possible implementation of the first aspect to the fourth possible implementation of the first aspect, in a fifth possible implementation, the graphene is a graphene nanosheet, graphene oxide, or reduced graphene oxide.

With reference to the first aspect or any one of the first possible implementation of the first aspect to the fifth possible implementation of the first aspect, in a sixth possible implementation, when the graphene is the graphene nanosheet, a lateral dimension of the functionalized graphene is greater than or equal to 0.1 micrometer and less than or equal to 150 micrometers; or when the graphene is the graphene oxide or the reduced graphene oxide, a lateral dimension of the functionalized graphene is greater than or equal to 1 micrometer and less than or equal to 150 micrometers.

It should be noted that in this embodiment, a larger lateral dimension of the functionalized graphene indicates better heat conduction performance of the functionalized graphene.

With reference to the first aspect or any one of the first possible implementation of the first aspect to the sixth possible implementation of the first aspect, in a seventh possible implementation, electric conductivity of the functionalized graphene is greater than or equal to $10^{-8}$ S/m and less than or equal to 1,000 S/m.

It should be noted that electric conductivity of graphene is usually greater than 1,000 S/m. For example, the electric conductivity of the graphene is greater than or equal to 8,000 S/m and less than or equal to 10,000 S/m. It can be learned that the electric conductivity of the functionalized graphene provided in this application is less than the electric conductivity of the graphene in the prior art.

With reference to the first aspect or any one of the first possible implementation of the first aspect to the seventh possible implementation of the first aspect, in an eighth possible implementation, a thickness of the graphene is of nano-scale. Optionally, an average thickness of the graphene is greater than 0.3 nanometer and less than or equal to 20 nanometers.

It should be noted that thicker graphene has higher electric conductivity and poorer heat conduction performance. This is because thicker graphene has more layers, and because thermal resistance between two adjacent layers is relatively large, heat conduction performance of the graphene is relatively poor. It should be further noted that in this application, in a thickness direction of the graphene, the graphene differs not greatly or differs slightly in thickness at different locations, and the thickness of the graphene at different locations is close to the average thickness. Therefore, in this embodiment, an average thickness of selected graphene is relatively small, so that the functionalized graphene prepared by using the graphene has relatively low electric conductivity and relatively good heat conductivity.

With reference to the first aspect or any one of the first possible implementation of the first aspect to the eighth possible implementation of the first aspect, in a ninth possible implementation, a lateral dimension of the graphene is greater than or equal to 3 micrometers and less than or equal to 300 micrometers.

It should be noted that, a larger lateral dimension of the graphene indicates a larger lateral dimension of the functionalized graphene prepared by using the graphene, so that the functionalized graphene has better heat conductivity.

With reference to the first aspect or any one of the first possible implementation of the first aspect to the ninth possible implementation of the first aspect, in a tenth possible implementation, in the graphene, a weight percentage of carbon is greater than or equal to 40% and less than or equal to 99.9%, and a weight percentage of oxygen is greater than or equal to 0.1% and less than or equal to 60%.

It should be noted that an objective that the graphene contains the oxygen is to graft the active functional groups. Generally, higher content of the oxygen in the graphene indicates a larger quantity of active molecules included in the functionalized graphene prepared by using the graphene. The larger quantity of active molecules included in the functionalized graphene indicates lower electric conductivity of the functionalized graphene.

According to a second aspect, this application provides a method for preparing functionalized graphene.

Specifically, the preparation method includes:

heating a solution in which graphene and a silane coupling agent disperse, to obtain a first solution, where graphene onto whose surface silanes are grafted disperses in the first solution, and the graphene onto whose surface silanes are grafted is obtained after a hydrolysable group of the silane coupling agent chemically reacts with an oxygen-containing functional group on the surface of the graphene;

heating the first solution, to obtain a second solution, where the functionalized graphene disperses in the second solution, and an active molecule in the functionalized graphene is obtained after at least two silanes grafted onto the silane-grafted graphene surface are polymerized; and

drying the second solution, to obtain the functionalized graphene described in the first aspect or any possible implementation of the first aspect.

In this embodiment, because the functionalized graphene has a plurality of terminal functional groups, and the plurality of terminal functional groups include at least two active functional groups, after the functionalized graphene disperses in silicone oil, the at least two active functional groups can chemically react with molecules in the silicone oil, so that compatibility between the functionalized graphene and the silicone oil is better than compatibility between graphene and silicone oil in the prior art.

In addition, in this embodiment, the first solution is heated, so that the at least two silanes grafted onto the surface of the graphene are polymerized, to obtain an active molecule grafted onto the surface of the graphene. Because each silane is grafted onto the surface of the graphene by using one *C-O-Si* covalent bond, correspondingly, each active molecule is grafted onto the surface of the graphene by using at least two *C-O-Si* covalent bonds. Because each active molecule is obtained after at least two silanes are polymerized, with respect to a shape of a silane, a shape of the active molecule is more like a net. To be specific, a coverage range of each active molecule on the surface of the graphene is greater than coverage ranges of the at least two silanes that are on the surface of the graphene and that are subjected to a reaction to obtain the corresponding active molecule. Therefore, compared with functionalized graphene onto whose surface silanes are grafted, the functionalized graphene prepared by using the preparation method provided in this application has lower electric conductivity.

With reference to the second aspect, in a first possible implementation, the silane coupling agent further disperses in the first solution. Correspondingly, the active molecule in the functionalized graphene is obtained after the at least two silanes grafted onto the silane-grafted graphene surface are polymerized, or is obtained after at least one silane grafted onto the silane-grafted graphene surface and the silane coupling agent are polymerized.

In this embodiment, the active molecule is obtained after the at least two silanes are polymerized, or is obtained after the at least one silane and the silane coupling agent are polymerized. It should be noted that regardless of a manner of obtaining the active molecule, a molecular weight of the active molecule is greater than a molecular weight of the silane. Therefore, compared with the graphene onto whose surface silanes are grafted, the graphene (or the functionalized graphene) onto whose surface the active molecule is grafted has lower electric conductivity.

With reference to the second aspect or the first possible implementation of the second aspect, in a second possible implementation, the graphene is monolayer graphene or multilayer graphene. When the graphene is monolayer graphene, the surface of the graphene is a surface of the monolayer graphene. When the graphene is multilayer graphene, the surface of the graphene is a surface of the multilayer graphene, or between two adjacent graphene layers of the multilayer graphene. For the surface of the multilayer graphene, refer to the foregoing explanations, and details are not described herein again.

With reference to the second aspect, the first possible implementation of the second aspect, or the second possible implementation of the second aspect, in a third possible implementation, during heating of the solution in which the graphene and the silane coupling agent disperse, a heating temperature is greater than or equal to 25 degrees Celsius and less than or equal to 100 degrees Celsius, and a heating time is greater than or equal to 0.1 hour and less than or equal to 12 hours.

Optionally, the heating temperature is greater than or equal to a normal temperature and less than or equal to 70 degrees Celsius. The normal temperature herein should be a temperature in a general environment rather than a temperature in a particular environment.

With reference to the second aspect or any one of the first possible implementation of the second aspect to the third possible implementation of the second aspect, in a fourth possible implementation, during heating of the first solution, a heating temperature is greater than or equal to 120 degrees Celsius and less than or equal to 240 degrees Celsius, and a heating time is greater than or equal to 0.1 hour and less than or equal to 24 hours.

With reference to the second aspect or any one of the first possible implementation of the second aspect to the fourth possible implementation of the second aspect, in a fifth possible implementation, a thickness of the graphene is of nano-scale. Optionally, an average thickness of the graphene is greater than 0.3 nanometer and less than or equal to 20 nanometers.

It should be noted that thicker graphene has higher electric conductivity and poorer heat conduction performance. This is because thicker graphene has more layers, and because thermal resistance between two adjacent layers is relatively large, heat conduction performance of the graphene is relatively poor. It should be further noted that in this application, in a thickness direction of the graphene, the graphene differs not greatly or differs slightly in thickness at different locations, and the thickness of the graphene at different locations is close to the average thickness. Therefore, in this embodiment, an average thickness of selected graphene is relatively small, so that the functionalized graphene prepared by using the graphene has relatively low electric conductivity and relatively good heat conductivity.

With reference to the second aspect or any one of the first possible implementation of the second aspect to the fifth possible implementation of the second aspect, in a sixth possible implementation, a lateral dimension of the graphene is greater than or equal to 3 micrometers and less than or equal to 300 micrometers.

It should be noted that a larger lateral dimension of the graphene indicates a larger lateral dimension of the functionalized graphene prepared by using the graphene, so that the functionalized graphene has better heat conductivity.

With reference to the second aspect or any one of the first possible implementation of the second aspect to the sixth possible implementation of the second aspect, in a seventh possible implementation, in the graphene, a weight percentage of carbon is greater than or equal to 40% and less than or equal to 99.9%, and a weight percentage of oxygen is greater than or equal to 0.1% and less than or equal to 60%.

It should be noted that an objective that the graphene contains the oxygen is to graft the active functional groups. Generally, higher content of the oxygen in the graphene indicates a larger quantity of active molecules included in the functionalized graphene prepared by using the graphene. The larger quantity of the active molecules included in the functionalized graphene indicates lower electric conductivity of the functionalized graphene.

According to a third aspect, this application further provides polyorganosiloxane. Specifically, the polyorganosiloxane includes the functionalized graphene described in the first aspect or any possible implementation of the first aspect and a plurality of siloxanes. Each siloxane includes at least three $Si-O$ bonds, and the at least three $Si-O$ bonds are connected in series.

The plurality of siloxanes include at least one first siloxane and at least one second siloxane. Each first siloxane is combined with a main chain structure by using a $Si-O-Si$ bond, and in the $Si-O-Si$ bond, $Si-O$ comes from the first siloxane, and $Si$ comes from the main chain structure. Each second siloxane is combined with the main chain structure by using an alkyl group, or each second siloxane is combined, by using a chemical bond, with a silicon-hydrogen bond or an unsaturated bond grafted onto a surface of the functionalized graphene.

It should be noted that the alkyl group includes at least two carbon atoms.

As described in the first aspect, the functionalized graphene has relatively low electric conductivity. Therefore, the polyorganosiloxane provided in this embodiment also has relatively low electric conductivity. Further, because active functional groups included in the functionalized graphene can chemically react with a cross-linking agent in silicone oil. Compared with graphene in the prior art, the functionalized graphene in the obtained polyorganosiloxane can relatively evenly disperse in the silicone oil, and aggregation caused when the graphene disperses in the silicone oil can be reduced to some extent. Therefore, the polyorganosiloxane prepared by using the functionalized graphene and the silicone oil has better heat conduction performance.

With reference to the third aspect, a heat conducting filler is added to the polyorganosiloxane. The heat conducting filler may be aluminum oxide, boron nitride, aluminum nitride, or the like. The heat conducting filler is added to the polyorganosiloxane, so that heat conduction performance of the polyorganosiloxane can be further improved.

**BRIEF DESCRIPTION OF DRAWINGS**

FIG. 1A is a structural diagram of functionalized graphene according to this application;
FIG. 1B is a structural diagram of functionalized graphene according to this application;
FIG. 1C is a structural diagram of functionalized graphene according to this application;
FIG. 2 is a flowchart of a method for preparing functionalized graphene according to this application;
FIG. 3A shows chemical formulas indicating that graphene chemically reacts with a silane coupling agent to generate the graphene onto whose surface silanes are grafted according to this application;

FIG. 3B is an amplified diagram of the graphene onto whose surface silanes are grafted in FIG. 3A;

FIG. 4 is a structural diagram of functionalized graphene generated after the graphene onto whose surface silanes are grafted in FIG. 3B is subjected to a chemical reaction;

FIG. 5 shows a structural formula of polyorganosiloxane according to this application; and

FIG. 6 shows chemical formulas indicating that a polymer chemically reacts with a cross-linking agent to generate organic silicone resin according to this application.

## DESCRIPTION OF EMBODIMENTS

The following clearly and completely describes technical solutions in this application with reference to the accompanying drawings in this application.

This application provides functionalized graphene and a preparation method of the functionalized graphene. An embodiment of the functionalized graphene is mainly deployed in Part 1, and an embodiment of the preparation method of the functionalized graphene is mainly deployed in Part 2. Further, this application further provides polyorganosiloxane. The polyorganosiloxane is prepared by using the functionalized graphene. Specifically, an embodiment of the polyorganosiloxane is mainly deployed in Part 3.

It should be noted that Part 1, Part 2, and Part 3 are associated with each other. Therefore, for content that may be learned through mutual reference, after the content is described in one part (for example, Part 1), the content is not described in detail in the other parts (for example, Part 2 and Part 3) again. It is easily understood that for ease of understanding, for content that is not described in detail, refer to related descriptions in the other parts. This is not limited in this application.

Part 1

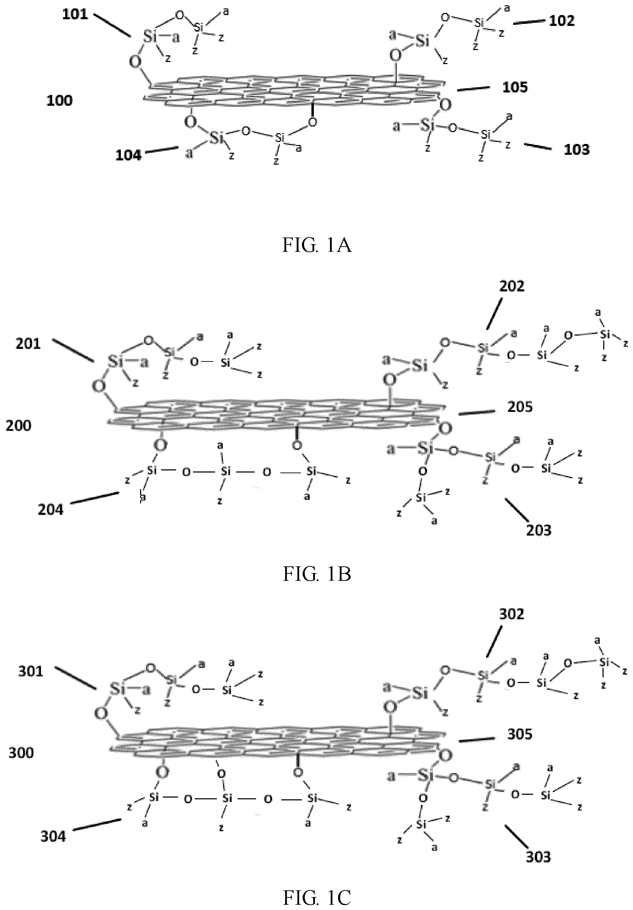

FIG. 1A and FIG. 1B are structural diagrams of functionalized graphene according to this application. The functionalized graphene provided in this application includes one or more active molecules and graphene. There is no chemical bond between any two of a plurality of active molecules. It should be noted that the graphene herein is different from graphene in the prior art, and the graphene herein is a part of the functionalized graphene rather than an independent material.

Further, when the functionalized graphene includes one active molecule, the active molecule is grafted onto the graphene by using at least two $C\text{-}O\text{-}Si$ covalent bonds.

When the functionalized graphene includes at least two active molecules, each active molecule is grafted onto the graphene by using at least one $C\text{-}O\text{-}Si$ covalent bond, and at least one of the at least two active molecules is grafted onto the graphene by using at least

two $C\text{-}O\text{-}Si$ covalent bonds.

It should be noted that the graphene may be monolayer graphene or multilayer graphene.

Optionally, when the graphene is the monolayer graphene, that the active molecule is grafted onto the graphene specifically means that the active molecule is grafted onto a surface of the monolayer graphene.

Optionally, when the graphene is the multilayer graphene, that the active molecule is grafted onto the graphene specifically means that the active molecule is grafted onto a surface of the multilayer graphene, or is grafted between two adjacent graphene layers of the multilayer graphene. The surface of the multilayer graphene is outer surfaces of two outermost graphene layers of the multilayer graphene. It should be noted that a surface that is of each outermost layer of graphene and that faces an adjacent layer of graphene is an inner surface, and an outer surface of each outermost layer of graphene is another surface opposite to the inner surface of the layer of graphene.

It should be noted that unless otherwise specially noted, a surface of graphene mentioned in other places of this application is applicable to the explanation of the "the surface of the graphene" in this part, and details are not described subsequently again.

It should be noted that a main chain structure of the active molecule is a structure obtained after at least two $Si\text{-}O$ bonds are connected in series and then connected to a $Si$ bond in series, or is a $Si\text{-}O\text{-}Si$ structure. A person skilled in the art should learn that when a silane is grafted onto a surface of graphene, the silane is combined with the graphene by using a $C\text{-}O\text{-}Si$ covalent bond, and a main chain structure of the silane is a $Si\text{-}O$ structure. Therefore, an objective of defining the main chain structure of the active molecule is to indicate that the active molecule in this application is not a silane.

Further, the active molecule includes a plurality of terminal functional groups (the plurality herein means at least two), and each terminal functional group is connected to one $Si$ in the main chain structure. It should be noted that one $Si$ in the main chain structure may be connected to one or more terminal functional groups.

It is easily understood that the connection in that "each terminal functional group is connected to one $Si$ in the main chain structure" may be direct connection or may be indirect connection (for example, by using a chain group such as an alkyl group). Therefore, optionally, each of the plurality of terminal functional groups is directly connected to one $Si$ in the main chain structure. Alternatively, each of the plurality of terminal functional groups is connected to one $Si$ in the main chain structure by using the chain group such as the alkyl group. Alternatively, in the plurality of terminal functional groups, each of some terminal functional groups is directly connected to one $Si$ in the main chain structure, and each of the other terminal functional groups is connected to one $Si$ in the main chain structure by using the chain group such as the alkyl group. It should be noted that a quantity of the "some terminal functional groups" is greater than or equal to 1, and correspondingly, a quantity of "the other terminal functional groups" is also greater than or equal to 1.

It should be further noted that the plurality of terminal functional groups include at least two active functional groups.

Optionally, the at least two active functional groups include at least one silicon-hydrogen bond or unsaturated bond, and at least one oxygen-containing hydrolysable group. Optionally, the unsaturated bond is a carbon-carbon double bond or a carbon-carbon triple bond. Further optionally, the carbon-carbon double bond may be a vinyl group or a propenyl group. Optionally, the oxygen-containing hydrolysable group is a group that can be hydrolyzed to generate silanol, and specifically, the oxygen-containing hydrolysable group may be an alkoxy group or an acyloxy group.

Optionally, the graphene in this application may be a graphene nanosheet, graphene oxide, or reduced graphene oxide. When the graphene is the graphene nanosheet, a lateral dimension of the functionalized graphene is greater than or equal to 0.1 micrometer and less than or equal to 150 micrometers. Alternatively, when the graphene is the graphene oxide or the reduced graphene oxide, a lateral dimension of the functionalized graphene is greater than or equal to 1 micrometer and less than or equal to 150 micrometers.

It should be noted that a thickness of the graphene is generally of nano-scale. Optionally, in this application, an average thickness of the graphene is greater than 0.3 nanometer and less than or equal to 20 nanometers. Further optionally, in this application, an average thickness of the graphene is greater than or equal to 0.3 nanometer and less than or equal to 10 nanometers.

Optionally, a lateral dimension of the graphene in this application is greater than or equal to 3 micrometers and less than or equal to 300 micrometers. Further optionally, a lateral dimension of the graphene in this application is greater than or equal to 10 micrometers and less than or equal to 200 micrometers. Further optionally, a lateral dimension of the graphene in this application is greater than or equal to 20 micrometers and less than or equal to 150 micrometers.

Optionally, electric conductivity of the functionalized graphene provided in this application is greater than or equal to $10^{-8}$ S/m and less than or equal to 1,000 S/m. It should be noted that electric conductivity of graphene is usually greater than 1,000 S/m. Therefore, the electric conductivity of the functionalized graphene provided in this application is less than electric conductivity of graphene in the prior art.

Optionally, in the functionalized graphene provided in this application, a weight percentage of carbon is greater than or equal to 50% and less than or equal to 99.8%, a weight percentage of oxygen is greater than or equal to 0.1% and less than or equal to 49.9%, and a weight percentage of silicon is greater than or equal to 0.1% and less than or equal to 49.9%.

Optionally, in the functionalized graphene provided in this application, a weight percentage of silicon is greater than or equal to 0.1% and less than or equal to 25%. Further optionally, in the functionalized graphene provided in this application, a weight percentage of silicon is greater than or equal to 1% and less than or equal to 25%.

It should be noted that in the solution provided in this application, heat conduction performance and electric conduction performance of the functionalized graphene can be adjusted by controlling a quantity of active molecules and a molecular weight of the active molecule in the functionalized graphene. Alternatively, heat conduction performance and electric conduction performance of the functionalized graphene can be adjusted by adjusting a category, a quantity, concentration, or the like of the active functional groups included in the functionalized graphene.

It should be noted that the concentration R of the active functional groups included in the functionalized graphene is equal to a ratio of a difference between a weight M of the functionalized graphene and a weight N of the graphene reacting to generate the functionalized graphene to the weight N of the graphene reacting to generate the functionalized graphene. That is:

$$R = (M - N)/N.$$

It should be noted that the concentration of the active functional groups included in the functionalized graphene may be determined by using a plurality of analysis methods. The plurality of analysis methods may be an X-ray photoelectron spectroscopy (X-ray photoelectron spectroscopy, XPS) analysis method, a Fourier Transform infrared spectroscopy (Fourier Transform infrared spectroscopy, FTIR) analyzer analysis method, a scanning electron microscope (scanning electron microscope, SEM) analysis method, and the like.

Specifically, FIG. 1A, FIG. 1B, and FIG. 1C are structural diagrams of functionalized graphene.

As shown in FIG. 1A, functionalized graphene 100 includes four active molecules (101, 102, 103, and 104). In the four active molecules, the active molecule 104 is grafted onto graphene 105 by using two *C-O-Si* covalent bonds, and each of the other three active molecules (101, 102, and 103) is grafted onto the graphene 105 by using one *C-O-Si* covalent bond. It is easily learned that in the five *C-O-Si* covalent bonds, *C* in each *C-O-Si* covalent bond comes from the graphene 105, and *Si* in each *C-O-Si* covalent bond comes from a main chain structure of the active molecule.

A main chain structure of each of the active molecules (101, 102, 103, and 104) in the functionalized graphene 100 is a *Si-O-Si* structure.

As shown in FIG. 1B, functionalized graphene 200 also includes four active molecules (201, 202, 203, and 204). In the four active molecules, the active molecule 204 is grafted onto graphene 205 by using at least two (including two) *C-O-Si* covalent bonds, and each of the other three active molecules (201, 202, and 203) is grafted onto the graphene 205 by using one *C-O-Si* covalent bond. It is easily learned that in the six *C-O-Si* covalent bonds, *C* in each *C-O-Si* covalent bond comes from the graphene 205, and *Si* in each *C-O-Si* covalent bond comes from a main chain structure of the active molecule.

In the functionalized graphene 200, a main chain structure of each of the active molecules 201 and 204 is a structure obtained after two *Si-O* bonds are connected in series and then connected to a *Si* bond in series; a main chain structure of the active molecule 202 is a structure obtained after three *Si-O* bonds are connected in series and then connected to a *Si* bond in series; and a main chain structure of the active molecule 203 is a structure obtained after two *Si-O* bonds are connected in series and then connected to a *Si* bond in series. *Si* in a main chain of the active molecule 203 is connected to *Si* in a branch chain of the active molecule 203 by using a *Si-O-Si* bond. *Si* s in the *Si-O-Si* bond come from *Si* in the main chain and *Si* in the branch chain.

As shown in FIG. 1C, functionalized graphene 300 also includes four active molecules (301, 302, 303, and 304). In the four active molecules, the active molecule 304 is grafted onto graphene 305 by using three *C-O-Si* covalent bonds, and each of the other three active molecules (301, 302, and 303) is grafted onto the graphene 305 by using one *C-O-Si* covalent bond. It is easily learned that in the six *C-O-Si* covalent bonds, *C* in each *C-O-Si* covalent bond comes from the graphene 305, and *Si* in each *C-O-Si* covalent bond comes from a main chain structure of the active molecule.

In the functionalized graphene 300, a main chain structure of each of the active molecules 301 and 304 is a structure obtained after two *Si-O* bonds are connected in series and then connected to a *Si* bond in series; a main chain structure of the active molecule 302 is a structure obtained after three *Si-O* bonds are connected in series and then connected to a *Si* bond in series; and a main chain structure of the active molecule 303 is a structure obtained after two *Si-O* bonds are connected in series and then connected to a *Si* bond in series. *Si* in a main chain of the active molecule 303 is connected to *Si* in a branch chain of the active molecule 303 by using a *Si-O-Si* bond. *Si* s in the *Si-O-Si* bond come from *Si* in the main chain and *Si* in the branch chain.

Each of the active molecules (101 to 104, 201 to 204, and 301 to 304) includes one or more *z* s, and each active molecule further includes one or more *a* s. It should be noted that in FIG. 1A, FIG. 1B, and FIG. 1C, *a* is *H* or an unsaturated bond (for example, $CH = CH_2$), and *z* is an oxygen-containing hydrolysable group (for example, $OCH_3$).

Because the active functional groups included in the functionalized graphene provided in this application may chemically react with molecules in silicone oil, compared with compatibility between graphene and silicone oil in the prior art, compatibility between the functionalized graphene and the silicone oil is relatively good, so that the functionalized graphene can relatively evenly disperse in the silicone oil, and aggregation caused when the graphene disperses in the silicone oil can be avoided to some extent. In addition, because the functionalized graphene includes one or more active molecules, the active molecule is a siloxane, and the active molecule covers, like a net, the surface of the graphene included in the functionalized graphene, compared with graphene in the prior art, the functionalized graphene provided in this application has lower electric conductivity.

It should be noted that both the graphene and the functionalized graphene can chemically react with the molecules in the silicone oil. Therefore, "dispersion" in that "the graphene disperses in the silicone oil" and in that "the functionalized graphene disperses in the silicone oil" in this application does not mean physical dispersion, but is merely used to describe a physical relationship between the graphene and the silicone oil or between the functionalized graphene and the silicone oil. It should be noted that the physical dispersion means that a solute dissolves in a solvent, and the solute does not chemically react with the solvent. Therefore, when the graphene disperses in the silicone oil, the graphene may chemically react with the molecules in the silicone oil. Correspondingly, when the functionalized graphene disperses in the silicone oil, the functionalized graphene may also chemically react with the molecules in the silicone oil.

Part 2

This application further provides a preparation method of functionalized graphene. The functionalized graphene described in the foregoing embodiment can be prepared by using the preparation method. Therefore, in this embodiment, a part related to the functionalized graphene is not described again. For details, refer to the foregoing embodiment. This embodiment focuses on description of the preparation method and content related to the preparation method. It should be noted that the preparation method provided in this application uses a hydrothermal reaction method.

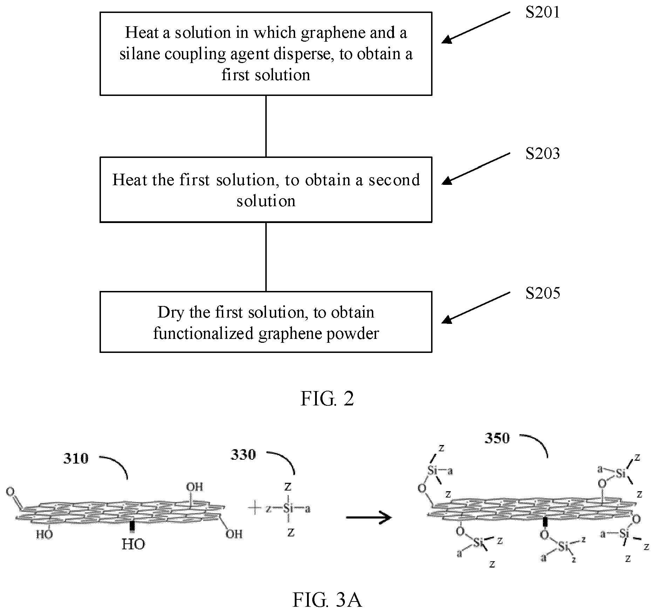

Specifically, as shown in FIG. 2, the preparation method includes the following steps.

S201. Heat a solution in which graphene and a silane coupling agent disperse, to obtain a first solution, where graphene onto whose surface silanes are grafted disperses in the first solution, and the graphene onto whose surface silanes are grafted is obtained after a hydrolysable group of the silane coupling agent chemically reacts with an oxygen-containing functional group on a surface of the graphene.

It should be noted that the graphene and the silane coupling agent are raw materials used for preparing the functionalized graphene.

It should be noted that the graphene dispersing in the solution is independent graphene rather than graphene forming the functionalized graphene. Alternatively, except the oxygen-containing functional group inherent in the graphene dispersing in the solution, no compound (for example, silanes or siloxanes) is grafted onto the surface of the graphene.

Optionally, the graphene may be a graphene nanosheet, graphene oxide, or reduced graphene oxide.

Generally, a thickness of the graphene is of nano-scale. Optionally, an average thickness of the graphene is greater than 0.3 nanometer and less than or equal to 20 nanometers. Further optionally, an average thickness of the graphene is greater than or equal to 0.3 nanometer and less than or equal to 10 nanometers.

Optionally, a lateral dimension of the graphene is greater than or equal to 3 micrometers and less than or equal to 300 micrometers. Further optionally, a lateral dimension of the graphene is greater than or equal to 10 micrometers and less than or equal to 200 micrometers. Further optionally, a lateral dimension of the graphene is greater than or equal to 20 micrometers and less than or equal to 150 micrometers.

Optionally, in the graphene, a weight percentage of carbon is greater than or equal to 40% and less than or equal to 99.9%, and a weight percentage of oxygen is greater than or equal to 0.1% and less than or equal to 60%.

Optionally, in this application, the oxygen-containing functional group on the surface of the graphene dispersing in the solution may be $-OH$, $-COOH$, or $-C = O$. The oxygen-containing functional group may chemically react with the hydrolysable group in the silane coupling agent under a particular condition. For example, active hydrogen in $-OH$ or $-COOH$ and the hydrolysable group in the silane coupling agent are combined, and are subjected to a reaction of removing a small molecule, such as dealcoholization.

It should be noted that the silane coupling agent is an organosilicon compound whose molecules include two groups having different chemical properties, and a typical product thereof may be represented by using a general formula $YSiX_3$. In the formula, Y represents a non-hydrolysable group, including an alkenyl group (which is mainly a vinyl group) and a hydrocarbon radical, namely, a carbon functional group, that has a functional group such as $CL$, $NH_2$, $SH$, an epoxide, $N_3$, a (methyl) acryloyloxy group, or an isocyanate group at the end; and X represents a hydrolysable group, including $CL$, $OMe$, $OEt$, $OC_2H_4OCH_3$, $OSiMe_3$, $OAc$, or the like.

Optionally, in this application, the silane coupling agent may be a vinyl silane coupling agent. A general formula of the vinyl silane coupling agent is $CH_2 = CH(CH_2)_nSiX_3$. Generally, X is a chlorine group, a methoxy group, an ethoxy group, a methoxyethoxy group, an acetoxy group, or the like. The vinyl silane coupling agent is mainly used for plastic reinforcement, and also has functions of a coupling agent and a cross-linking agent. The vinyl silane coupling agent may be a 3-(methacryloxy) propyl trimethoxy silane, a vinyl trimethoxy silane, a vinyl triethoxy silane, a vinyl tris(2-methoxyethoxy) silane, or the like.

It should be noted that the silane coupling agent is usually liquid, and sometimes may be in a paste form. "The solution in which the graphene and the silane coupling agent disperse" in step S201 may be specifically obtained by mixing a graphene solution into a silane coupling agent solution, or may be obtained by mixing the graphene into a silane coupling agent solution, or may be obtained by mixing the silane coupling agent into a graphene solution. It should be noted that a solvent in the solution in which the graphene and the silane coupling agent disperse includes water.

It should be noted that when the solution in which the graphene and the silane coupling agent disperse is obtained by using the graphene solution, concentration of the graphene solution is usually greater than or equal to 0.1 g/L and less than or equal to 10 g/L.

Optionally, the graphene solution may be a graphene nanosheet solution, or a graphene oxide solution, or may be a reduced graphene oxide solution.

Optionally, during heating of the solution in which the graphene and the silane coupling agent disperse, a heating temperature is usually greater than a normal temperature and less than 100 degrees Celsius, and a heating time is greater than or equal to 0.1 hour and less than or equal to 12 hours. The normal temperature is generally approximately 25 degrees Celsius. Further optionally, the heating temperature may be greater than the normal temperature and less than 70 degrees Celsius.

Optionally, during heating of the solution in which the graphene and the silane coupling agent disperse, the solution in which the graphene and the silane coupling agent disperse needs to be heated to a temperature ranging from the normal temperature to 100 degrees Celsius, and the heating time is greater than or equal to 0.1 hour and less than or equal to 12 hours.

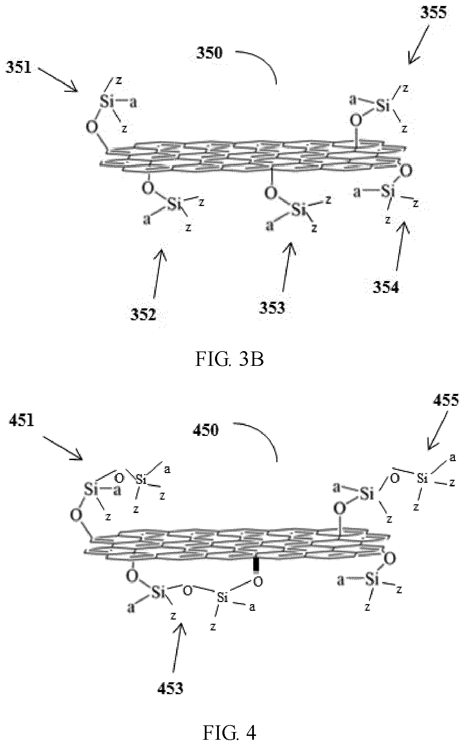

FIG. 3A shows chemical formulas indicating that graphene 310 reacts with a silane coupling agent 330 to generate graphene 350 onto whose surface silanes are grafted. It should be noted that in FIG. 3A, $a$ represents $H$ or an unsaturated bond, and the unsaturated bond may be $CH = CH_2$ or the like. In FIG. 3A, $z$ represents an oxygen-containing hydrolysable group, for example, $OCH_3$. Therefore, in FIG. 3A, the silane coupling agent 330 includes three oxygen-containing hydrolysable groups and one $H$ or unsaturated bond. Further, FIG. 3B is a detailed diagram of the graphene 350 onto whose surface silanes are grafted in FIG. 3A. It is easily learned that the graphene 350 onto whose surface silanes are grafted includes five silanes, each silane is grafted onto the surface of the graphene by using a $C-O-Si$ covalent bond, and reference numerals corresponding to the five silanes are 351, 352, 353, 354, and 355.

S203. Heat the first solution, to obtain a second solution, where the functionalized graphene disperses in the second solution, and an active molecule in the functionalized graphene is obtained after at least two silanes grafted onto the silane-grafted graphene surface are polymerized.

Specifically, the polymerization in step 203 may be condensation polymerization. It should be noted that unless otherwise specially emphasized, polymerization in other parts of this application may also be condensation polymerization.

Optionally, the first solution further includes the silane coupling agent, and the silane coupling agent is remaining after the reaction in step S201. Then, the silane coupling agent and at least one silane grafted onto the silane-grafted graphene surface are polymerized, to obtain an active molecule grafted onto the surface of the graphene.

It should be noted that when the functionalized graphene includes at least two active molecules, chemical formulas of the at least two active molecules may be the same, but are usually different. This is because some active molecules are obtained after P silanes are polymerized and some active molecules are obtained after Q silanes are polymerized, where both P and Q are integers greater than or equal to 2, and P is not equal to Q. Optionally, some active molecules are obtained after L1 silanes and K1 silane coupling agents are polymerized, and some active molecules are obtained after L2 silanes and K2 silane coupling agents are polymerized, where L1, L2, K2, and K2 are integers greater than or equal to 1, and when L1 is equal to L2, K1 is not equal to K2, or when L1 is not equal to L2, K1 may be equal to K2 or may be not equal to K2.

Optionally, during heating of the first solution, a heating temperature is greater than or equal to 120 degrees Celsius and less than or equal to 240 degrees Celsius, and a heating time is greater than or equal to 0.1 hour and less than or equal to 24 hours.

Optionally, during heating of the first solution, the first solution needs to be heated to a temperature greater than or equal to 120 degrees Celsius and less than or equal to 240 degrees Celsius, and a heating time is greater than or equal to 0.1 hour and less than or equal to 24 hours.

It should be noted that in this application, the first solution and the second solution are logically defined.

Actually, after the solution in which the graphene and the silane coupling agent disperse is heated, both the graphene onto whose surface silanes are grafted and the graphene onto whose surface the active molecule is grafted disperse in the obtained first solution. The active molecule may be obtained after at least two silanes grafted onto the silane-grafted graphene surface are polymerized, or may be obtained after the silane coupling agent and at least one silane grafted onto the silane-grafted graphene surface are polymerized, or may be obtained after at least two active molecules grafted onto the active molecule-grafted graphene surface are polymerized. It should be noted that when an active molecule is obtained after at least two active molecules are polymerized, a molecular weight of the active molecule obtained after the polymerization is necessarily greater than a molecular weight of each active molecule participating in the polymerization.

Correspondingly, the active molecule included in the functionalized graphene dispersing in the second solution is obtained after the at least two silanes grafted onto a surface of same graphene are polymerized. During an actual implementation, the active molecule may also be obtained after the active molecule and the silane that are grafted onto a surface of same graphene are subjected to a reaction, or may be obtained after the silane grafted onto a surface of graphene and the silane coupling agent are polymerized, or may be obtained after the at least two active molecules grafted onto a surface of same graphene are polymerized, or may be obtained after the active molecule grafted onto a surface of graphene and the silane coupling agent are polymerized.

FIG. 4 is a structural diagram of functionalized graphene 450. It should be noted that the functionalized graphene 450 shown in FIG. 4 is obtained after the graphene 350 onto whose surface silanes are grafted in FIG. 3B is subjected to a chemical reaction. The functionalized graphene 450 includes active molecules 451, 453, and 455. The active molecule 451 is obtained after the silane 351 grafted onto the surface of the graphene 350 onto whose surface silanes are grafted and the silane coupling agent are polymerized. The active molecule 455 is obtained after the silane 355 grafted onto the surface of the graphene 350 onto whose surface silanes are grafted and the silane coupling agent are polymerized. The active molecule 453 is obtained after the silanes 352 and 353 that are grafted onto the surface of the graphene 350 onto whose surface silanes are grafted are polymerized.

S205. Dry the second solution, to obtain the functionalized graphene described in any embodiment of Part 1.

It should be noted that an objective of drying the second solution in step S205 is to obtain functionalized graphene powder. Optionally, the drying treatment may be specifically: Leaving the second solution at a temperature of 60 degrees Celsius for 24 hours.

After the second solution is obtained and before the second solution is dried, optionally, the second solution may be filtered, to remove impurities from the second solution.

After the second solution is filtered, and before the second solution is dried, optionally, the filtered second solution may be washed by using a solvent such as ethyl alcohol, water, or isopropyl alcohol, to remove the silane coupling agent remaining in the second solution after step S203, to obtain a relatively pure functionalized graphene solution. It should be noted that the silane coupling agent remaining in the second solution after step S203 is a silane coupling agent that is not polymerized with the silanes grafted onto the silane-grafted graphene surface for generating the active molecule.

Optionally, in the preparation method provided in this application, a weight percentage of the silane coupling agent to the graphene is greater than or equal to 0.1 and less than or equal to 50.

It should be noted that in the preparation method provided in this application, a reaction temperature and a reaction time are adjusted, so that a functionalization degree of the graphene can be adjusted (or concentration and a molecular weight of the active molecule included in the functionalized graphene can be adjusted), and further, electric conduction performance of the functionalized graphene can be adjusted.

It should be further noted that within a particular range, the functionalization degree of the graphene and the electric conduction performance of the functionalized graphene can be adjusted by adjusting the weight percentage of the silane coupling agent to the graphene. This is because within the particular range, the functionalization degree of the graphene is in direct proportion to an addition amount of the silane coupling agent. An upper limit of the particular range is related to the graphene. Specifically, when the weight percentage of the silane coupling agent to the graphene is greater than a value, and reaction between the silane coupling agent and the graphene is saturated, the silane coupling agent cannot react with an oxygen-containing functional group on the surface of the graphene, and cannot react with the silanes grafted onto the silane-grafted graphene surface. In this case, even if an amount of the silane coupling agent is increased, the functionalization degree of the graphene cannot be changed.

It should be noted that after the graphene is functionalized, a dimension of the obtained functionalized graphene is reduced compared with a dimension of the graphene.

In an embodiment of this application, the following describes a method for preparing functionalized graphene by using graphene oxide. Specifically, the method includes the following steps.

S211. Mix a graphene oxide solution with a silane coupling agent solution, to form a solution A1.

Optionally, in the solution A1, a mass percentage of a silane coupling agent to graphene oxide is 20:0.01.

Optionally, the solution A1 is placed in a hydrothermal reactor. Further optionally, the hydrothermal reactor is a 50 ml Teflon container.

Optionally, in the graphene oxide, a weight percentage of carbon is greater than or equal to 60% and less than or equal to 99.9%, and a weight percentage of oxygen is greater than or equal to 0.1% and less than or equal to 40%.

S212. Heat the solution A1 to 70 degrees Celsius, and continuously heat the solution A1 for 0.1 to 12 hours, to obtain a solution A2.

It should be noted that the solution A2 usually includes graphene oxide onto whose surface silanes are grafted. The graphene oxide onto whose surface silanes are grafted is obtained after the silane coupling agent reacts with an oxygen-containing functional group on the surface of the graphene oxide. However, it should be noted that the solution A2 may further include graphene oxide onto whose surface an active molecule is grafted. The active molecule may be obtained after at least two silanes grafted onto the silane-grafted graphene oxide surface are polymerized, or may be obtained after the silane coupling agent and at least one silane grafted onto the silane-grafted graphene oxide surface are polymerized, or may be obtained after at least two active molecules are polymerized. After the at least two active molecules are polymerized, a molecular weight of the obtained active molecule is greater than a molecular weight of each of the at least two active molecules.

S213. Heat the solution A2 to 120 degrees Celsius to 240 degrees Celsius, and continuously heat the solution A2 for 0.1 to 24 hours, to obtain a solution A3.

It should be noted that the solution A3 includes functionalized graphene. The functionalized graphene is obtained after the functionalized graphene oxide is subjected to a reduction reaction after being heated. An active molecule in the functionalized graphene oxide may be obtained after at least two active molecules are polymerized, or may be obtained after an active molecule and a silane are polymerized, or may be obtained after an active molecule and the silane coupling agent are polymerized, or may be obtained after a silane grafted onto the silane-grafted graphene oxide surface and the silane coupling agent are polymerized.

S214. Filter the solution A3, and wash the filtered solution A3 by using an ethyl alcohol solvent, to remove the silane coupling agent remaining in the filtered solution A3, to obtain a solution A4.

S215. Leave the solution A4 at a temperature of 60 degrees Celsius for 24 hours, to obtain dried functionalized graphene powder.

In another embodiment of this application, the following describes a method for preparing functionalized graphene by using a graphene nanosheet.

Specifically, the method may include the following steps S221 to S226.

S221. Stir 0.2 g of a graphene nanosheet and 1 g of a silane coupling agent for five minutes by using a high speed mixer, to obtain a mixture.

Optionally, the silane coupling agent may be a (3-Mercaptopropyl) triethoxy silane (MPTES).

Optionally, a rotational speed of the high speed mixer is 3,500 rpm.

S222. Add 200 ml of ethyl alcohol to the mixture and perform ultrasonic dispersion for 12 hours, to obtain a mixed solution B1.

S223. Add acetic acid to the mixed solution B1, to obtain a mixed solution B2 whose PH value is 5.

S224. Heat the mixed solution B2 to 70 degrees Celsius, and continuously heat the mixed solution B2 for 3 hours, to obtain a mixed solution B3.

It should be noted that the mixed solution B3 includes graphene (or functionalized graphene) onto whose surface an active molecule is grafted. For features of the functionalized graphene, refer to the related descriptions in Part 1 of the specific implementation of this application.

S225. Continue to filter the mixed solution B3, and wash the filtered mixed solution B3, to remove the silane coupling agent in the filtered mixed solution B3, to obtain a functionalized graphene solution.

S226. Dry the functionalized graphene solution, to obtain functionalized graphene powder.

Optionally, the method may include the following steps S231 to S234.

S231. Enable a weight percentage of a graphene nanosheet to a silane coupling agent to be 20:0.01, and dissolve the graphene nanosheet and the silane coupling agent in water, to obtain a solution C1 in which the graphene nanosheet and the silane coupling agent disperse.

Optionally, the solution C1 is accommodated in a 50 ml hydrothermal reactor.

S232. Heat the solution C1 to 70 degrees Celsius, and continuously heat the solution C1 for 0.1 to 12 hours, to obtain a solution C2.

It should be noted that the solution C2 usually includes graphene onto whose surface silanes are grafted. The graphene onto whose surface silanes are grafted is obtained after the silane coupling agent reacts with an oxygen-containing functional group on a surface of graphene oxide. However, it should be noted that the solution C2 may further include graphene onto whose surface an active molecule is grafted. The active molecule may be obtained after at least two silanes grafted onto the silane-grafted graphene surface are polymerized, or may be obtained after the silane coupling agent and at least one silane grafted onto the silane-grafted graphene surface are polymerized, or may be obtained after at least two active molecules are polymerized. After the at least two active molecules are polymerized, a molecular weight of the obtained active molecule is greater than a molecular weight of each of the at least two active molecules.

S233. Heat the solution C2 to 120 to 40 degrees Celsius, and continuously heat the solution C2 for 0.1 to 24 hours, to obtain a solution C3.

It should be noted that the solution C3 includes functionalized graphene. An active molecule in the functionalized graphene oxide may be obtained after at least two active molecules are polymerized, or may be obtained after an active molecule and a silane are polymerized, or may be obtained after an active molecule and the silane coupling agent are polymerized, or may be obtained after a silane grafted onto the silane-grafted graphene surface and the silane coupling agent are polymerized.

S234. Finally, filter, wash, and dry the solution C3, to obtain functionalized graphene powder.

Part 3

This application further provides polyorganosiloxane. The polyorganosiloxane includes functionalized graphene and a plurality of siloxanes. Each of the plurality of siloxanes includes at least three $Si\text{-}O$ bonds, and the at least three $Si\text{-}O$ bonds are connected in series. That is, when one siloxane includes three $Si\text{-}O$ bonds, the siloxane is of a $Si\text{-}O\text{-}Si\text{-}O\text{-}Si\text{-}O$ structure. Correspondingly, a structure of each siloxane may be further expressed as $Si\text{-}O\text{-}Si\text{-}O\text{-}...\text{-}Si\text{-}O$.

Further, the plurality of siloxanes include at least one first siloxane and at least one second siloxane.

Each first siloxane is combined with a main chain structure of the functionalized graphene by using a $Si\text{-}O\text{-}Si$ bond, and in the $Si\text{-}O\text{-}Si$ bond, $Si\text{-}O$ comes from the first siloxane, and $Si$ comes from the main chain structure. Each second siloxane is combined with the main chain structure of the functionalized graphene by using an alkyl group, or each second siloxane is combined with a silicon-hydrogen bond or an unsaturated bond in the functionalized graphene by using a chemical bond.

It should be noted that the alkyl group includes at least two carbon atoms.

It should be noted that a quantity of the first siloxanes is related to a quantity of oxygen-containing hydrolysable groups included in the functionalized graphene described in Part 1. When the functionalized graphene described in Part 1 includes the silicon-hydrogen bond but does not include the unsaturated bond, a quantity of the second siloxanes is related to a quantity of the silicon-hydrogen bonds. When the functionalized graphene described in Part 1 includes the unsaturated bond but does not include the silicon-hydrogen bond, a quantity of the second siloxanes is related to a quantity of the unsaturated bonds. When the functionalized graphene described in Part 1 includes both the unsaturated bond and the silicon-hydrogen bond, a quantity of the second siloxanes is related to quantities of the unsaturated bonds and the silicon-hydrogen bonds.

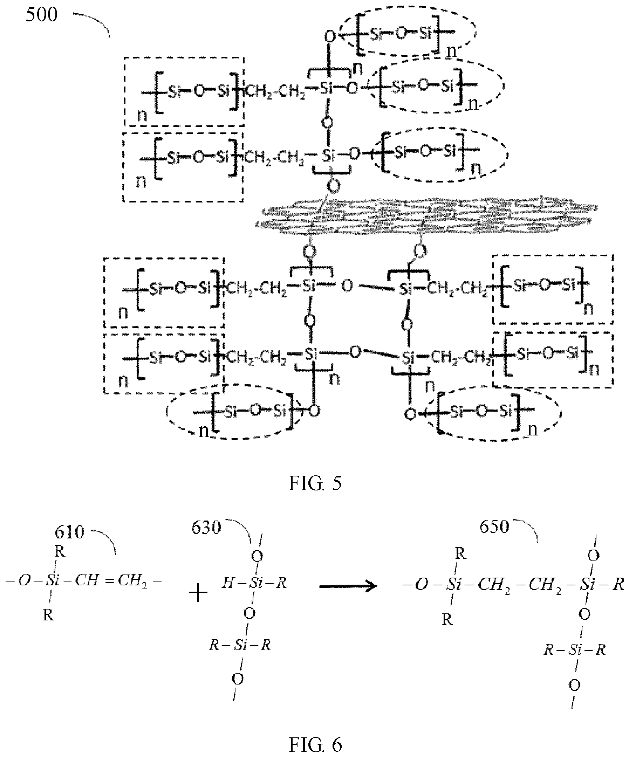

FIG. 5 shows a chemical formula of polyorganosiloxane 500 according to this application. As shown in FIG. 5, the polyorganosiloxane 500 includes five siloxanes enclosed by five elliptical dashed boxes and six siloxanes enclosed by six square dashed boxes. The siloxanes enclosed by the elliptical dashed boxes correspond to the foregoing first siloxane and the siloxanes enclosed by the square dashed boxes correspond to the foregoing second siloxane. It is easily learned from FIG. 5 that the first siloxane is combined with the main chain structure of the functionalized graphene by using a $Si\text{-}O\text{-}Si$ bond, and the second siloxane is combined with the main chain structure of the functionalized graphene by using an alkyl group or a chemical bond. It should be noted that $[Si\text{-}O\text{-}Si]_n$ in FIG. 5 represents that $n$ $Si\text{-}O\text{-}Si$

s are connected in series, where *n* is an integer greater than or equal to 2.

It should be noted that the polyorganosiloxane provided in this application is obtained after the functionalized graphene described in any embodiment of Part 1 chemically reacts with silicone oil. In other words, in the polyorganosiloxane provided in this application, a plurality of molecular chains of the silicone oil wind around a surface of the functionalized graphene, and correspondingly the functionalized graphene is embedded in the plurality of molecular chains of the silicone oil, so that the functionalized graphene and the molecular chains of the silicone oil form a cross-linked network. It should be emphasized that the functionalized graphene chemically reacts with the molecular chains of the silicone oil to form covalent bonds, that is, the functionalized graphene is embedded in the plurality of molecular chains of the silicone oil by using the covalent bonds.

It should be noted that the silicone oil usually includes two components: a polymer (polymer) and a cross-linking agent (cross-linker). The polymer, also referred to as a prepolymer or a copolymer, may be silicone oil having a long chain siloxane structure. A terminal group of the polymer may be an unsaturated bond such as a vinyl group, and a typical polymer is polydimethylsiloxane (PDMS) including a vinyl group. The cross-linking agent is usually silicone oil whose terminal group is a *Si-H* group. Alternatively, the cross-linking agent is usually a silane or siloxane whose terminal group is a *Si-H* group. When heated, the polymer and the cross-linking agent can be subjected to a cross-linking chemical reaction by using metal composite catalyst such as a platinum (Pt) group, to form organic silicone resin. FIG. 6 shows chemical formulas indicating that a polymer 610 reacts with a cross-linking agent 630 to generate organic silicone resin 650. R in the cross-linking agent 630 is used to represent an alkyl group, for example, $CH_3$.

That the polyorganosiloxane is obtained after the functionalized graphene chemically reacts with the silicone oil means that the polyorganosiloxane is obtained after the functionalized graphene, the cross-linking agent, and the polymer are subjected to a chemical reaction.

Specifically, when a terminal functional group of the cross-linking agent in the silicone oil is a *Si-H* bond, active functional groups included in the functionalized graphene are combined with the *Si-H* bond of the cross-linking agent by using chemical bonds. When a terminal functional group of the polymer in the silicone oil is a *Si-OH* bond, active functional groups included in the functionalized graphene are combined with the *Si-OH* bond of the polymer by using chemical bonds. When the terminal functional group of the polymer in the silicone oil is an unsaturated bond, the active functional groups included in the functionalized graphene are combined with the unsaturated bond of the polymer by using chemical bonds.

Optionally, the active functional groups included in the functionalized graphene may be the same as the terminal functional group of the polymer. In this case, a curing manner of silicone oil including the functionalized graphene is addition curing.

It should be noted that "the active functional groups included in the functionalized graphene" does not mean all active functional groups included in the functionalized graphene, but means at least some active functional groups included in the functionalized graphene. To be specific, this application does not impose such a limitation that all active functional groups included in the functionalized graphene are the same as the terminal functional group of the polymer. The at least some usually means a plurality or at least two.

In an implementation of this application, when the active functional groups included in the functionalized graphene are the same as the terminal functional group of the polymer, the active functional groups included in the functionalized graphene and the terminal functional group of the polymer both chemically react with the terminal functional group of the cross-linking agent, to generate the polyorganosiloxane.

It should be noted that the active functional groups that are included in the functionalized graphene and that are subjected to the chemical reaction should be the foregoing "at least some active functional groups", or functional groups the same as the terminal functional group of the polymer.

Optionally, the active functional groups included in the functionalized graphene chemically react with the terminal functional group of the cross-linking agent, to generate a first intermediate product. The first intermediate product chemically reacts with the terminal functional group of the polymer, to obtain the polyorganosiloxane.

Optionally, the terminal functional group of the polymer chemically reacts with the terminal functional group of the cross-linking agent, to generate a second intermediate product. The second intermediate product chemically reacts with the active functional groups of the functionalized graphene, to obtain the polyorganosiloxane.

Optionally, the active functional groups included in the functionalized graphene may be the same as the terminal functional group of the cross-linking agent. In this case, a curing manner of the silicone oil including the functionalized graphene is condensation polymerization curing (briefly referred to as "polycondensation curing" below). For definition of "the active functional groups included in the functionalized graphene" in this application, refer to the foregoing related explanations, and details are not described herein again.

In an implementation of this application, when the active functional groups included in the functionalized graphene are the same as the terminal functional group of the cross-linking agent, the active functional groups included in the functionalized graphene and the terminal functional group of the cross-linking agent both chemically react with the terminal functional group of the polymer, to obtain the polyorganosiloxane.

It should be noted that the active functional groups that are included in the functionalized graphene and that are subjected to the chemical reaction should be the foregoing "at least some active functional groups", or functional groups the same as the terminal functional group of the cross-linking agent.

Optionally, the active functional groups included in the functionalized graphene chemically react with the terminal functional group of the polymer, to generate a third intermediate product. The third intermediate product chemically reacts with the terminal functional group of the cross-linking agent, to obtain the polyorganosiloxane.

Optionally, the terminal functional group of the polymer chemically reacts with the terminal functional group of the cross-linking agent, to generate a fourth intermediate product. The fourth intermediate product chemically reacts with the functionalized graphene, to obtain the polyorganosiloxane.

It should be noted that, that "the active functional groups included in the functionalized graphene are the same as the terminal functional group of the cross-linking agent" means that the active functional groups included in the functionalized graphene include functional groups the same as the terminal functional group of the cross-linking agent. To be specific, not all active functional groups included in the functionalized graphene are the same as the terminal functional group of the cross-linking agent.

Specifically, when the active functional groups of the functionalized graphene are alkoxy groups, the terminal functional group of the cross-linking agent is an alkoxy group, and the terminal functional group of the polymer is a *Si-OH* group, the polymer and the cross-linking agent can chemically react with each other under an effect of a condensation catalyst. The alkoxy group may be an active functional group, for example, a trimethoxy group, a dimethoxy group, or a triethoxy group, that can chemically react with the *Si-OH* group. It should be noted that a curing manner of the silicone oil including the functionalized graphene is polycondensation curing.

It should be noted that the first, second, third, and fourth are merely used for mutual differentiation, and are used to indicate that the first intermediate product, the second intermediate product, the third intermediate product, and the fourth intermediate product are different. The first to the fourth themselves do not have meanings, and therefore, do not constitute a limitation to the noun (namely, "intermediate product") following them.

It should be noted that the active functional groups included in the functionalized graphene are related to a silane coupling agent used for preparing the functionalized graphene. The active functional groups included in the functionalized graphene may be determined by selecting a specific silane coupling agent. For example, when a silane coupling agent including an alkoxy group is selected to prepare the functionalized graphene, the prepared functionalized graphene includes the alkoxy group. Specifically, when the terminal functional group of the cross-linking agent is determined, an appropriate silane coupling agent is selected, so that active functional groups included in functionalized graphene prepared by using the silane coupling agent are the same as the terminal functional group of the cross-linking agent. Alternatively, when the terminal functional group of the polymer is determined, an appropriate silane coupling agent is selected, so that active functional groups included in functionalized graphene prepared by using the silane coupling agent are the same as the terminal functional group of the polymer.

Optionally, a weight percentage of the functionalized graphene in the polyorganosiloxane prepared by using the functionalized graphene may be greater than or equal to 0.1% and less than or equal to 30%.

Optionally, a weight percentage of the functionalized graphene in the polyorganosiloxane prepared by using the functionalized graphene may be greater than or equal to 0.5% and less than or equal to 20%.

Optionally, a weight percentage of the functionalized graphene in the polyorganosiloxane prepared by using the functionalized graphene may be greater than or equal to 0.5% and less than or equal to 15%.

An experiment shows that when a temperature is determined, higher concentration of the active functional groups included in the functionalized graphene indicates a larger coefficient of heat conductivity of the polyorganosiloxane prepared by using the functionalized graphene. The experiment further shows that when a shear rate is determined, higher concentration of the active functional groups included in the functionalized graphene indicates higher viscosity of the polyorganosiloxane prepared by using the functionalized graphene.

According to the polyorganosiloxane provided in this application, because the functionalized graphene can chemically react with molecules in the silicone oil, and then, the functionalized graphene is combined with a molecular chain of the molecules by using a covalent bond, the functionalized graphene is evenly distributed in the polyorganosiloxane that is prepared by using the functionalized graphene and the silicone oil, thereby avoiding aggregation in the prior art to some extent. Correspondingly, the polyorganosiloxane prepared by using the functionalized graphene has relatively good heat conduction performance. In addition, because the functionalized graphene is graphene onto whose surface an active molecule is grafted, compared with the graphene, the functionalized graphene has lower electric conduction performance. Therefore, compared with organic silicone resin that is prepared by using graphene and silicone oil, the polyorganosiloxane that is prepared by using the functionalized graphene and the silicone oil has lower electric conduction performance.

Optionally, a heat conducting filler is further added to the polyorganosiloxane. The heat conducting filler may be aluminum oxide, boron nitride, aluminum nitride, or the like. The heat conducting filler is added to the poly-organic silicone resin, so that heat conduction performance of the polyorganosiloxane can be further improved.

In a specific embodiment, functionalized graphene powder is added to a cured organic silicone base material (the organic silicone base material may be cured through addition curing), and a 3-roll mill is used to prepare a mixture in a paste form by using the organic silicone base material and the functionalized graphene. A heat conducting filler may be further added to the mixture in a paste form, for example, spherical aluminum oxide with a weight percentage ranging from 50% to 98% may be added. Then, the heat conducting material in a paste form is cured at a temperature of 140 degrees Celsius, to obtain a final heat conducting material. It should be noted that a coefficient of heat conductivity of the organic silicone base material is 0.16 W/mk.

An experiment result shows that when the functionalized graphene with a weight percentage of 3% is added to the organic silicone base material, a coefficient of heat conductivity of the final heat conducting material may reach 0.21 W/mk. When the functionalized graphene with a weight percentage of 5% is added to the organic silicone base material, a coefficient of heat conductivity of the final heat conducting material may reach 0.28 W/mk. The experiment result further shows that electric conductivity of the final heat conducting material still remains below 10E-06 S/m, that is, the final heat conducting material has an insulation characteristic. In addition, viscosity of the final heat conducting material may reach 1.2 Pa·s. Because the viscosity of the organic silicone base material is 0.7 Pa·s, compared with the viscosity of the organic silicone base material, the viscosity of the final heat conducting material is improved, so that the final heat conducting material still has good processability.

The foregoing descriptions are merely specific implementations of the present invention, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Functionalized graphene, comprising one or more active molecules and graphene, wherein the active molecules are separated from each other, each active molecule is grafted onto the graphene by using a $C$-$O$-$Si$ covalent bond, and at least one active molecule is grafted onto the graphene by using a plurality of $C$-$O$-$Si$ covalent bonds, and $C$ in the $C$-$O$-$Si$ covalent bond comes from the graphene; and a main chain structure of the active molecule is a structure obtained after at least two $Si$-$O$ bonds are connected in series and then connected to a $Si$ bond in series, and the active molecule has at least two active functional groups.

2. The functionalized graphene according to claim 1, wherein in the functionalized graphene, a weight percentage of carbon is greater than or equal to 50% and less than or equal to 99.8%, a weight percentage of oxygen is greater than or equal to 0.1% and less than or equal to 49.9%, and a weight percentage of silicon is greater than or equal to 0.1% and less than or equal to 49.9%.

3. The functionalized graphene according to claim 1 or 2, wherein the graphene is multilayer graphene, and the active molecule is grafted onto a surface of the multilayer graphene, or grafted between two adjacent graphene layers of the multilayer graphene.

4. The functionalized graphene according to any one of claims 1 to 3, wherein each of the at least two active functional groups is connected to one $Si$ in the main chain structure.

5. The functionalized graphene according to any one of claims 1 to 4, wherein the at least two active functional groups comprise at least one silicon-hydrogen bond or unsaturated bond, and at least one oxygen-containing hydrolysable group.

6. The functionalized graphene according to claim 5, wherein the oxygen-containing hydrolysable group is an alkoxy group or an acyloxy group.

7. The functionalized graphene according to any one of claims 1 to 6, wherein the graphene is a graphene nanosheet, graphene oxide, or reduced graphene oxide.

8. The functionalized graphene according to claim 7, wherein when the graphene is the graphene nanosheet, a lateral dimension of the functionalized graphene is greater than or equal to 0.1 micrometer and less than or equal to 150 micrometers; or when the graphene is the graphene oxide or the reduced graphene oxide, a lateral dimension of the functionalized graphene is greater than or equal to 1 micrometer and less than or equal to 150 micrometers.

9. The functionalized graphene according to any one of claims 1 to 8, wherein electric conductivity of the functionalized graphene is greater than or equal to $10^{-8}$ S/m and less than or equal to 1,000 S/m.

10. The functionalized graphene according to any one of claims 1 to 9, wherein *Si* in the *C-O-Si* covalent bond comes from the main chain structure of the active molecule.

11. The functionalized graphene according to any one of claims 1 to 10, wherein at least one active molecule is grafted onto the graphene by using one *C-O-Si* covalent bond.

12. Functionalized graphene, comprising one or more active molecules and graphene, wherein a plurality of active molecules are separated from each other, each active molecule is grafted onto the graphene by using a *C-O-Si* covalent bond, at least one active molecule is grafted onto the graphene by using a plurality of *C-O-Si* covalent bonds, at least one active molecule is grafted onto the graphene by using one *C-O-Si* covalent bond, and C in the *C-O-Si* covalent bond comes from the graphene; and a main chain structure of the active molecule is a *Si-O-Si* structure, and the active molecule has at least two active functional groups.

13. The functionalized graphene according to claim 1, wherein
in the functionalized graphene, a weight percentage of carbon is greater than or equal to 50% and less than or equal to 99.8%, a weight percentage of oxygen is greater than or equal to 0.1% and less than or equal to 49.9%, and a weight percentage of silicon is greater than or equal to 0.1% and less than or equal to 49.9%.

14. The functionalized graphene according to claim 12 or 13, wherein the graphene is multilayer graphene, and the active molecule is grafted onto a surface of the multilayer graphene, or grafted between two adjacent graphene layers of the multilayer graphene.

15. The functionalized graphene according to any one of claims 12 to 14, wherein each of the at least two active functional groups is connected to one *Si* in the main chain structure.

16. The functionalized graphene according to any one of claims 12 to 15, wherein
the at least two active functional groups comprise at least one silicon-hydrogen bond or unsaturated bond, and at least one oxygen-containing hydrolysable group.

17. The functionalized graphene according to claim 16, wherein the oxygen-containing hydrolysable group is an alkoxy group or an acyloxy group.

18. The functionalized graphene according to any one of claims 12 to 17, wherein the graphene is a graphene nanosheet, graphene oxide, or reduced graphene oxide.

19. The functionalized graphene according to claim 18, wherein
when the graphene is the graphene nanosheet, a lateral dimension of the functionalized graphene is greater than or equal to 0.1 micrometer and less than or equal to 150 micrometers; or
when the graphene is the graphene oxide or the reduced graphene oxide, a lateral dimension of the functionalized graphene is greater than or equal to 1 micrometer and less than or equal to 150 micrometers.

20. The functionalized graphene according to any one of claims 12 to 19, wherein electric conductivity of the functionalized graphene is greater than or equal to $10^{-8}$ S/m and less than or equal to 1,000 S/m.

21. The functionalized graphene according to any one of claims 12 to 20, wherein *Si* in the *C-O-Si* covalent bond comes from the main chain structure of the active molecule.

22. A preparation method of the functionalized graphene according to any one of claims 1 to 11, wherein the method comprises:

heating a solution in which graphene and a silane coupling agent disperse, to obtain a first solution, wherein graphene onto whose surface silanes are grafted disperses in the first solution, and the graphene onto whose surface silanes are grafted is obtained after a hydrolysable group of the silane coupling agent chemically reacts with an oxygen-containing functional group on a surface of the graphene;
heating the first solution, to obtain a second solution, wherein the functionalized graphene disperses in the second solution, and an active molecule in the functionalized graphene is obtained after at least two silanes grafted onto the silane-grafted graphene surface are polymerized; and
drying the second solution, to obtain the functionalized graphene.

23. The preparation method according to claim 22, wherein if the silane coupling agent still disperses in the first solution, the active molecule in the functionalized graphene is obtained after the at least two silanes grafted onto the silane-grafted graphene surface are polymerized, or is obtained after at least one silane grafted onto the silane-grafted graphene surface and the silane coupling agent are polymerized.

**24.** The preparation method according to claim 22 or 23, wherein the graphene is multilayer graphene, and the surface of the graphene is a surface of the multilayer graphene, or between two adjacent graphene layers of the multilayer graphene.

**25.** The preparation method according to any one of claims 22 to 24, wherein during heating of the solution in which the graphene and the silane coupling agent disperse, a heating temperature is greater than or equal to 25 degrees Celsius and less than or equal to 100 degrees Celsius, and a heating time is greater than or equal to 0.1 hour and less than or equal to 12 hours.

**26.** The preparation method according to any one of claims 22 to 25, wherein during heating of the first solution, a heating temperature is greater than or equal to 120 degrees Celsius and less than or equal to 240 degrees Celsius, and a heating time is greater than or equal to 0.1 hour and less than or equal to 24 hours.

**27.** The preparation method according to any one of claims 22 to 26, wherein a lateral dimension of the graphene is greater than or equal to 3 micrometers and less than or equal to 300 micrometers.

**28.** The preparation method according to any one of claims 22 to 27, wherein an average thickness of the graphene is greater than or equal to 0.3 nanometer and less than or equal to 20 nanometers.

**29.** The preparation method according to any one of claims 22 to 28, wherein in the graphene, a weight percentage of carbon is greater than or equal to 40% and less than or equal to 99.9%, and a weight percentage of oxygen is greater than or equal to 0.1% and less than or equal to 60%.

**30.** A preparation method of the functionalized graphene according to any one of claims 12 to 21, wherein the method comprises:

> heating a solution in which graphene and a silane coupling agent disperse, to obtain a first solution, wherein graphene onto whose surface silanes are grafted disperses in the first solution, and the graphene onto whose surface silanes are grafted is obtained after a hydrolysable group of the silane coupling agent chemically reacts with an oxygen-containing functional group on a surface of the graphene;
> heating the first solution, to obtain a second solution, wherein the functionalized graphene disperses in the second solution, and an active molecule in the functionalized graphene is obtained after at least two silanes grafted onto the silane-grafted graphene surface are polymerized; and drying the second solution, to obtain the functionalized graphene.

**31.** The preparation method according to claim 30, wherein if the silane coupling agent still disperses in the first solution, the active molecule in the functionalized graphene is obtained after the at least two silanes grafted onto the silane-grafted graphene surface are polymerized, or is obtained after at least one silane grafted onto the silane-grafted graphene surface and the silane coupling agent are polymerized.

**32.** The preparation method according to claim 30 or 31, wherein the graphene is multilayer graphene, and the surface of the graphene is a surface of the multilayer graphene, or between two adjacent graphene layers of the multilayer graphene.

**33.** The preparation method according to any one of claims 30 to 32, wherein during heating of the solution in which the graphene and the silane coupling agent disperse, a heating temperature is greater than or equal to 25 degrees Celsius and less than or equal to 100 degrees Celsius, and a heating time is greater than or equal to 0.1 hour and less than or equal to 12 hours.

**34.** The preparation method according to any one of claims 30 to 33, wherein during heating of the first solution, a heating temperature is greater than or equal to 120 degrees Celsius and less than or equal to 240 degrees Celsius, and a heating time is greater than or equal to 0.1 hour and less than or equal to 24 hours.

**35.** The preparation method according to any one of claims 30 to 34, wherein a lateral dimension of the graphene is greater than or equal to 3 micrometers and less than or equal to 300 micrometers.

**36.** The preparation method according to any one of claims 30 to 35, wherein an average thickness of the graphene is greater than or equal to 0.3 nanometer and less than or equal to 20 nanometers.

**37.** The preparation method according to any one of claims 30 to 36, wherein in the graphene, a weight percentage of carbon is greater than or equal to 40% and less than or equal to 99.9%, and a weight percentage of oxygen is greater than or equal to 0.1% and less than or equal to 60%.

**38.** Polyorganosiloxane, comprising the functionalized graphene according to any one of claims 1 to 11 and a plurality of siloxanes, each siloxane comprises at least three $Si\text{-}O$ bonds, and the at least three $Si\text{-}O$

bonds are connected in series; the plurality of siloxanes comprise at least one first siloxane and at least one second siloxane; each first siloxane is combined with a main chain structure by using a *Si-O-Si* bond, and in the *Si-O-Si* bond, *Si-O* comes from the first siloxane, and *Si* comes from the main chain structure; and each second siloxane is combined with the main chain structure by using an alkyl group.

39. The polyorganosiloxane according to claim 38, wherein a heat conducting filler disperses in the polyorganosiloxane.

40. Polyorganosiloxane, comprising the functionalized graphene according to any one of claims 12 to 21 and a plurality of siloxanes, each siloxane comprises at least three *Si-O* bonds, and the at least three *Si-O* bonds are connected in series; the plurality of siloxanes comprise at least one first siloxane and at least one second siloxane; each first siloxane is combined with a main chain structure by using a *Si-O-Si* bond, and in the *Si-O-Si* bond, *Si-O* comes from the first siloxane, and *Si* comes from the main chain structure; and each second siloxane is combined with the main chain structure by using an alkyl group.

41. The polyorganosiloxane according to claim 40, wherein a heat conducting filler disperses in the polyorganosiloxane.

FIG. 1A

FIG. 1B

FIG. 1C

S201

Heat a solution in which graphene and a silane coupling agent disperse, to obtain a first solution

S203

Heat the first solution, to obtain a second solution

S205

Dry the first solution, to obtain functionalized graphene powder

FIG. 2

310    330    350

FIG. 3A

FIG. 3B

FIG. 4

FIG. 5

FIG. 6

<table>
<tr><td colspan="2" rowspan="2"><strong>INTERNATIONAL SEARCH REPORT</strong></td><td>International application No.</td></tr>
<tr><td>PCT/CN2018/073409</td></tr>
</table>

**A.    CLASSIFICATION OF SUBJECT MATTER**

C01B 32/194 (2017.01) i; C08K 9/06 (2006.01) i

According to International Patent Classification (IPC) or to both national classification and IPC

**B.    FIELDS SEARCHED**

Minimum documentation searched (classification system followed by classification symbols)

C01B; C08K

Documentation searched other than minimum documentation to the extent that such documents are included in the fields searched

Electronic data base consulted during the international search (name of data base and, where practicable, search terms used)

DWPI, SIPOABS, CNABS, CNKI: 石墨烯, 官能化, 功能化, 硅氧烷, 硅油, 硅烷偶联剂, graphene, siloxane, silicone, Si, O

**C.    DOCUMENTS CONSIDERED TO BE RELEVANT**

| Category* | Citation of document, with indication, where appropriate, of the relevant passages | Relevant to claim No. |
|---|---|---|
| PX | CN 107266713 A (HUAWEI TECHNOLOGIES CO., LTD. et al.), 20 October 2017 (20.10.2017), description, the section of the contents of invention | 1-41 |
| A | CN 102730674 A (NORTHWESTERN POLYTECHNICAL UNIVERSITY), 17 October 2012 (17.10.2012), description, paragraphs [0015]-[0020] | 1-41 |
| A | CN 102642830 A (NANJING UNIVERSITY), 22 August 2012 (22.08.2012), entire document | 1-41 |
| A | US 2016207944 A1 (UNIV. WASHINGTON STATE), 21 July 2016 (21.07.2016), entire document | 1-41 |
| A | CN 106744900 A (JIANGSU HUASHENG PLASTIC CO., LTD.), 31 May 2017 (31.05.2017), entire document | 1-41 |
| A | CN 106751636 A (RAILWAY ENGINEERING RESEARCH INSTITUTE, CHINA ACADEMY OF RAILWAY SCIENCES et al.), 31 May 2017 (31.05.2017), entire document | 1-41 |
| A | US 2016340495 A1 (UNIV. PRINCETON), 24 November 2016 (24.11.2016), entire document | 1-41 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 February 2018 | 22 March 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YAO, Xi<br><br>Telephone No. (86-10) 010-53962712 |

Form PCT/ISA/210 (second sheet) (July 2009)

## INTERNATIONAL SEARCH REPORT
### Information on patent family members

| | International application No. |
|---|---|
| | PCT/CN2018/073409 |

| Patent Documents referred in the Report | Publication Date | Patent Family | Publication Date |
|---|---|---|---|
| CN 107266713 A | 20 October 2017 | None | |
| CN 102730674 A | 17 October 2012 | CN 102730674 B | 06 November 2013 |
| CN 102642830 A | 22 August 2012 | None | |
| US 2016207944 A1 | 21 July 2016 | US 2014275597 A1 | 18 September 2014 |
| | | US 9290524 B2 | 22 March 2016 |
| | | US 9598445 B2 | 21 March 2017 |
| CN 106744900 A | 31 May 2017 | None | |
| CN 106751636 A | 31 May 2017 | None | |
| US 2016340495 A1 | 24 November 2016 | US 2011178224 A1 | 21 July 2011 |
| | | US 9441076 B2 | 13 September 2016 |

Form PCT/ISA/210 (patent family annex) (July 2009)

**EP 3 632 847 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710489652 X

- CN 201711455687